# EUROPEAN PATENT APPLICATION

(11) **EP 4 729 441 A1**
(43) Date of publication of application: **22.04.2026**
(21) Application number: 25734521.5
(22) Date of filing: 08.01.2025
(51) Int. Cl.: B65G 1/04

(54) **HANDLING ROBOT AND WAREHOUSING DEVICE**

(30) Priority: 13.09.2024 CN 202422263143 U
(71) Applicant: Hangzhou Hikrobot Co., Ltd., Hangzhou, Zhejiang 310051 (CN)
(72) Inventor: WU, Yonghai, Hangzhou, Zhejiang 310051 (CN); WU, Chao, Hangzhou, Zhejiang 310051 (CN); ZHAO, Luhao, Hangzhou, Zhejiang 310051 (CN)
(74) Representative: Yang, Shu
(86) International application number: PCT/CN2025/071178
(87) International publication number: WO 2025/140733

(57) **Abstract**

The embodiments of the present application provide a transfer robot and a warehousing system, wherein the warehousing system includes goods shelves, and a laneway is formed between adjacent goods shelves. The transfer robot is hung on a first goods shelf located at a side of the laneway; the transfer robot includes a support frame, a material box picking-up and placing component and a ground walking mechanism; the support frame can move in a horizontal direction on a side of the first goods shelf; the material box picking-up and placing component can rise and fall relative to the support frame and pick-up and place material boxes; the ground walking mechanism is arranged at a bottom of the support frame, is located in the laneway and at a side of the laneway which is close to the first goods shelf, and is configured to cooperate with the ground to provide a support force and walking power for the transfer robot. A portion of the weight of the transfer robot is applied to the ground through the ground walking mechanism, reducing the load bore by the goods shelves, that is, reducing the requirement for the load-bearing capacity of the goods shelves.

## Description

The present application claims the priority to a Chinese utility model patent application No. 202422263143.3 filed with the China National Intellectual Property Administration (CNIPA) on September 13, 2024 and entitled "TRANSFER ROBOT AND WAREHOUSING SYSTEM", which is incorporated herein by reference in its entirety.

### Technical Field

The present application relates to the technical field of logistics and warehousing, in particular to a transfer robot and a warehousing system.

### Background

In related technologies, a warehousing system generally includes goods shelves on which a transfer robot is arranged to handle material boxes on the goods shelves. Since the transfer robot is arranged on the goods shelves which causes the goods shelves to bear a high load, the requirement for the load-bearing capacity of the goods shelves is relatively high.

### Summary

The purpose of the embodiments in the present application is to provide a transfer robot and a warehousing system for reducing the load bore by goods shelves. The specific technical solutions are as follows.

An embodiment of the present application provides a transfer robot of a warehousing system, wherein the warehousing system includes goods shelves; a laneway is formed between adjacent goods shelves; the transfer robot is hung on a first goods shelf located at a side of the laneway; the transfer robot includes a support frame, a material box picking-up and placing component and a ground walking mechanism; wherein the support frame can move in a horizontal direction on a side of the first goods shelf; the material box picking-up and placing component can rise and fall relative to the support frame and pick-up and place material boxes; the ground walking mechanism is arranged at bottom of the support frame, is located in the laneway and at a side of the laneway which is close to the first goods shelf, and is configured to cooperate with a ground to provide a support force and walking power for the transfer robot.

An embodiment of the present application further provides a warehousing system including the goods shelves and the at least one transfer robot described in any one of the above embodiments; wherein a laneway is formed between adjacent goods shelves; the transfer robot is hung on the first goods shelf located at a side of the laneway; the ground walking mechanism at the bottom of the transfer robot is located in the laneway and at a side of the laneway which is close to the first goods shelf.

In the transfer robot and the warehousing system provided in the embodiments of the present application, the transfer robot is hung on the first goods shelf at a side of the laneway through the support frame, and can slide in the horizontal direction of the goods shelves; the ground walking mechanism is located in the laneway and at a side of the laneway which is close to the first goods shelf, and is configured to in rolling contact with the ground where the goods shelves are located, and can provide a support force and walking power for the transfer robot. A portion of the weight of the transfer robot is applied to the ground through the ground walking mechanism, reducing the load bore by the goods shelves, that is, reducing the requirement for the load-bearing capacity of the goods shelves.

Of course, it is not necessary for any product implementing the present application to achieve all the advantages described above simultaneously.

### Brief Description of the Drawings

The accompanying drawings described herein are used to provide a further understanding of the present application and constitute part of the present application. The illustrative embodiments of the present application and their descriptions are used to explain the present application and do not constitute an improper limitation on the present application.
Fig. 1a is a stereoscopic structure diagram of a warehousing system in an embodiment of the present application;
Fig. 1b is a front view of the warehousing system shown in Fig. 1a;
Fig. 2a is a stereoscopic structure diagram of a transfer robot shown in Fig. 1a;
Fig. 2b is a stereoscopic structure diagram of the transfer robot (a picking-up and placing platform is not shown) and horizontal track shown in Fig. 1a;
Fig. 2c is a stereoscopic structure diagram of the transfer robot (the picking-up and placing platform is not shown) and the horizontal track shown in Fig. 1a from another perspective;
Fig. 3a is an enlarged schematic diagram of part A in Fig. 2b;
Fig. 3b is an enlarged schematic diagram of part A in Fig. 2b from another perspective;
Fig. 4 is a decomposed schematic diagram of a ground walking mechanism shown in Fig. 2b;
Fig. 5 is an enlarged schematic diagram of part B in Fig. 2b;
Fig. 6a is a stereoscopic structure diagram of a lateral movement driving mechanism shown in Fig. 5;
Fig. 6b is a stereoscopic structure diagram of the lateral movement driving mechanism shown in Fig. 6a from another perspective;
Fig. 7 is an enlarged schematic diagram of part C in Fig. 2b;
Fig. 8a is a stereoscopic structure diagram of an auxiliary wheel set shown in Fig. 7;
Fig. 8b is a stereoscopic structure diagram of the auxiliary wheel set shown in Fig. 8a from another perspective.

Reference signs:
goods shelf 100; first goods shelf 100A;
transfer robot 200; support frame 210; column 210a; tow chain 211; material box picking-up and placing component 220; sliding connector 221; picking-up and placing platform 222;
ground walking mechanism 230; driving component 231; driving motor 2311; reducer 2312; walking wheel 2313; first output shaft 2314; second output shaft 2315; mounting component 232; mounting frame 2321; bearing base 2322; bearing 2323;
first suspension structure 240; first elastic member 241; first sliding member 242; first sliding block 242a; first sliding track 242b;
auxiliary wheel set 250; auxiliary wheel 251; first auxiliary wheel 2511; second auxiliary wheel 2512; auxiliary wheel mounting base 2513; second suspension structure 252; second elastic member 2521; second sliding member 2522; second sliding block 2522a; second sliding track 2522b; third fixing member 2523; fourth fixing member 2524;
lateral movement driving mechanism 260; lateral movement motor 261; driving wheel set 262; first driving wheel 263; second driving wheel 264; third driving wheel 265; third suspension structure 266; third elastic member 2661; first fixing member 2662; the second fixing member 2663; second driving wheel mounting base 2664;
lifting mechanism 270; lifting motor 271; conveyor belt 272; transmission wheel 273;
control device 280;
horizontal track 300; groove 310.

### Detailed Description

In order to make the objective, technical solutions and advantages of the present application clearer and more understandable, the present application will be described in more detail below with reference to the accompanying drawings and embodiments. Obviously, the described embodiments are only some, and not all, of the embodiments of the present application. All other embodiments obtained based on the embodiments of the present application by those skilled in the art fall into the scope of protection of the present application.

As mentioned in the background, in related technologies, a warehousing system generally includes goods shelves on which a transfer robot is arranged to handle material boxes on the goods shelves. Since the transfer robot is arranged on the goods shelves which cause the goods shelves to bear a high load, the requirement for the load-bearing capacity for the goods shelves is relatively high.

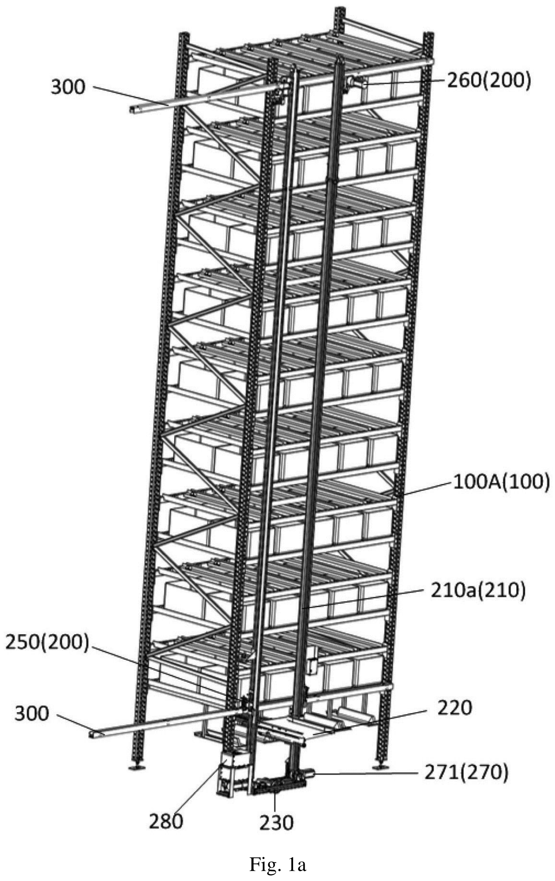

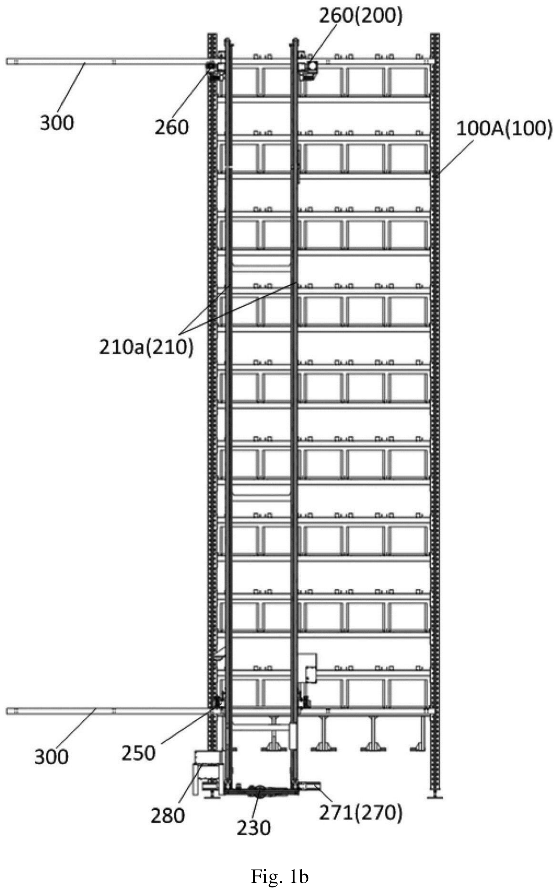

In order to reduce the load bore by the goods shelves, an embodiment of the present application provides a transfer robot and a warehousing system, see Fig. 1a and Fig. 1b. Fig. 1a is a stereoscopic structure diagram of a warehousing system in an embodiment of the present application; Fig. 1b is a front view of the warehousing system shown in Fig. 1a.

As shown in Figs. 1a and 1b, the warehousing system provided by the embodiment of the present application includes goods shelves 100 and a transfer robot 200, and a laneway is formed between adjacent goods shelf 100. The transfer robot 200 provided in the embodiment of the present application is described in detail in the following.

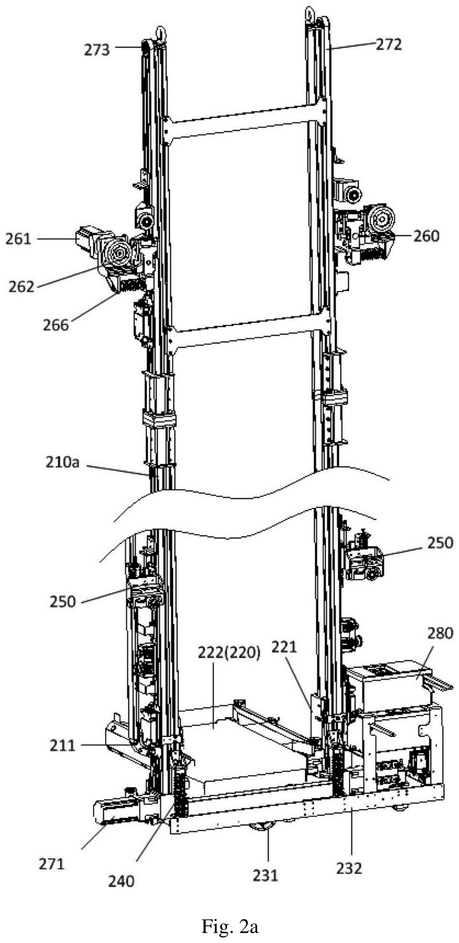

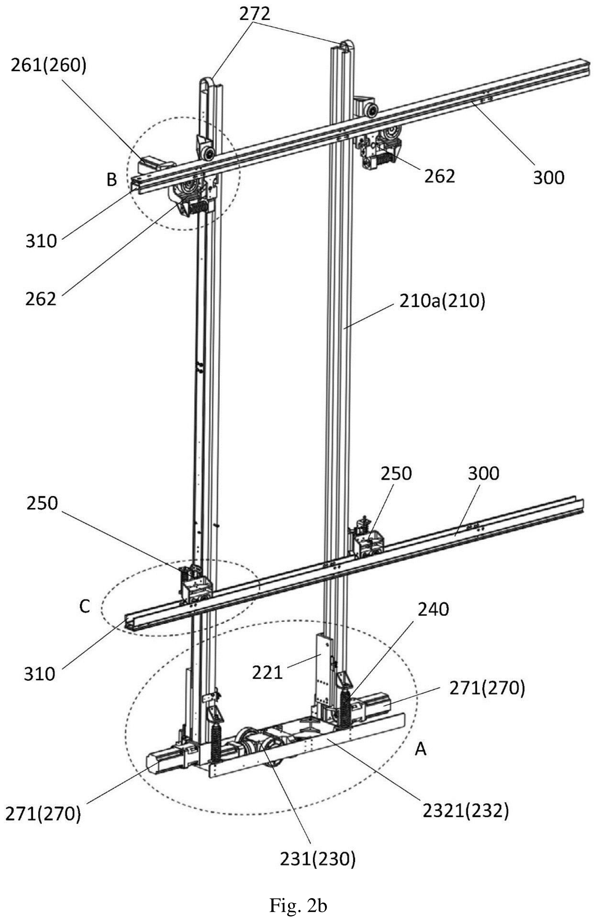

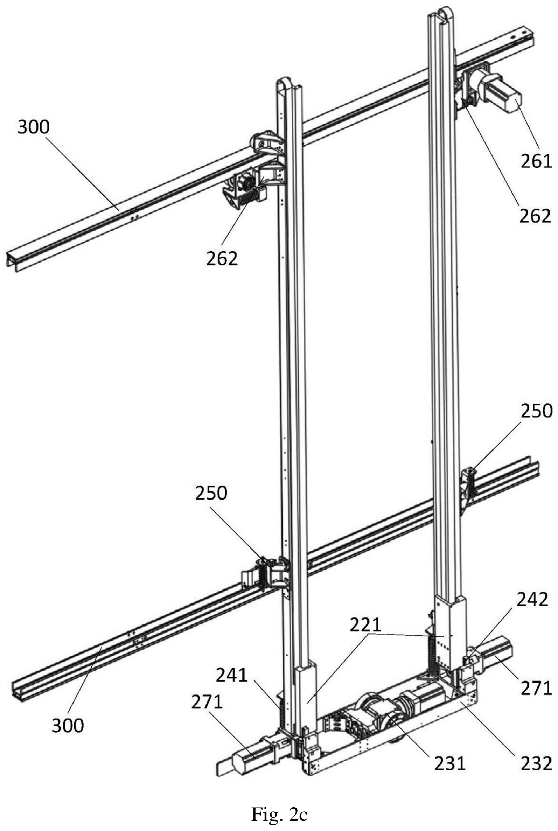

Referring to Fig. 2a to Fig. 2c, Fig. 2a is a stereoscopic structure diagram of the transfer robot shown in Fig. 1a; Fig. 2b s is a stereoscopic structure diagram of the transfer robot (a material box picking-up and placing component is not shown) and a horizontal track shown in Fig. 1a; Fig. 2c is a stereoscopic structure diagram of the transfer robot (the material box picking-up and placing component is not shown) and the horizontal track shown in Fig. 1a from another perspective.

As shown in Figs. 1a to 2c, the transfer robot 200 is hung on a first goods shelf 100A at a side of the laneway; the transfer robot 200 includes a support frame 210, a material box picking-up and placing component 220 and a ground walking mechanism 230; wherein the support frame 210 can move in the horizontal direction on a side of the first goods shelf 100A; the material box picking-up and placing component 220 can rise and fall relative to the support frame 210, and pick-up and place a material boxes; the ground walking mechanism 230 is arranged at bottom of the support frame 210, is located in the laneway and at a side of the laneway which is close to the first goods shelf 100A, and is configured to cooperate with the ground to provide a support force and walking power for the transfer robot 200.

Specifically, the adjacent goods shelves 100 include the first goods shelf 100A and a second goods shelf (not shown in the figure). The laneway is formed between the first goods shelf 100A and the second goods shelf, so that the transfer robot 200 moves horizontally in the laneway at a side of the laneway which is close to the side of the first goods shelf 100A to pick-up and place a material box on the first goods shelf 100A and/or the second goods shelf.

The support frame 210 is not shown in the transfer robot 200 shown in Fig. 2a, and a height of the support frame 210 is selected depend on a height of the goods shelves 100. There are various structures for the support frame 210, which can be a single column or a column portal frame composed of two columns. The present application does not limit this.

The material box picking-up and placing component 220 further can horizontally extend and retract relative to the support frame 210 to pick-up and place material boxes on the adjacent goods shelves 100 at two sides of the laneway.

In a specific embodiment given in the present application, the support frame 210 is a column portal frame including two columns 210a arranged oppositely. The material box picking-up and placing component 220 may include two sliding connectors 221, a picking-up and placing platform 222 and a telescopic mechanism (not shown in the figure), wherein the picking-up and placing platform 222 is configured to carry a material box and is arranged between two columns 210a of the support frame 210, two sides of the picking-up and placing platform 222 are respectively connected to the columns 210a by the sliding connectors 221 in a sliding manner, and the picking-up and placing platform 222 can rise and fall along the support frame 210 to pick-up and place material boxes at different heights on the goods shelves 100; the picking-up and placing platform 222 can further be driven by the telescopic mechanism to move out toward the first goods shelf 100A or the second goods shelf at both sides of the laneway, to pick-up and place material boxes on these two goods shelves 100.

In the transfer robot and the warehousing system provided in the embodiment of the present application, the transfer robot 200 is hung on the first goods shelf 100A at a side of the laneway through the support frame 210, and can slide in the horizontal direction of the goods shelves 100; the ground walking mechanism 230 is located in the laneway and at a side of the laneway which is close to the first goods shelf 100A, and is configured to be in rolling contact with the ground where the goods shelves 100 are located, and can provide a support force and walking power for the transfer robot 200. A portion of the weight of the transfer robot 200 is applied to the ground through the ground walking mechanism 230, reducing the load bore by the goods shelves 100, that is, reducing the requirement for the load-bearing capacity of the goods shelves 100.

In some embodiments of the present application, as shown in Figs. 1a and 1b, the goods shelves 100 are fixedly arranged with multiple horizontal tracks 300 on the outside of the goods shelves. The multiple horizontal tracks 300 are spaced apart in a vertical direction of the goods shelves 100. The transfer robot 200 is hung on the first goods shelf 100A through the multiple horizontal tracks 300.

Specifically, the support frame 210 is mounted vertically on the multiple horizontal tracks 300 and is movably connected to the first goods shelf 100A in the horizontal direction. The transfer robot 200 is hung on the first goods shelf 100A located at the side of the laneway through the multiple horizontal tracks 300, and moves in the horizontal direction of the goods shelves 100 based on the multiple horizontal tracks 300.

In the specific embodiment of the present application, as shown in Fig. 2b, an upper horizontal track 300 and a lower horizontal track 300 are fixed on an outside of the first goods shelf 100A, and the horizontal tracks 300 are arranged with grooves 310 extended in the horizontal direction. The support frame 210 is mounted on the horizontal tracks 300 in a suspended manner through the grooves 310.

By applying the embodiments of the present application, the transfer robot 200 can be hung on the first goods shelf 100A located at a side of the laneway based on the horizontal tracks 300 and move horizontally in a length direction of the goods shelves 100 to pick-up and place each material box in the length direction of the goods shelves 100.

In some embodiments of the present application, as shown in Figs. 2a to 2c, the ground walking mechanism 230 includes a driving component 231 arranged at bottom of the support frame 210. The driving component 231 is configured to be in rolling contact with the ground, to support and drive the support frame 210 to move on the ground in the horizontal direction of the goods shelves 100.

The ground walking mechanism 230 further includes a mounting component 232. The mounting component 232 is fixedly connected to the bottom of the support frame 210 or movably connected to the bottom of the support frame 210 in a vertical direction, and the driving component 231 is arranged at the mounting component 232.

By applying the embodiments of the present application, the transfer robot 200 applies a portion of its weight to the first goods shelf 100A by mounting on the horizontal tracks 300 in a suspended manner, and applies the other portion of its weight to the ground through the driving component 231 which is rolling contact with the ground, reducing the load bore by the first goods shelf 100A. In addition, arranging the driving component 231 enables the ground walking mechanism 230 to have a driving function. A portion of a driving force that drives the transfer robot 200 to move horizontally, comes from a movement of the driving component 231 relative to the ground, which makes the movement of the transfer robot 200 more stable; and the other portion of the driving force comes from a lateral movement driving mechanism 260 of the transfer robot 200, which is referred to the subsequent description for details.

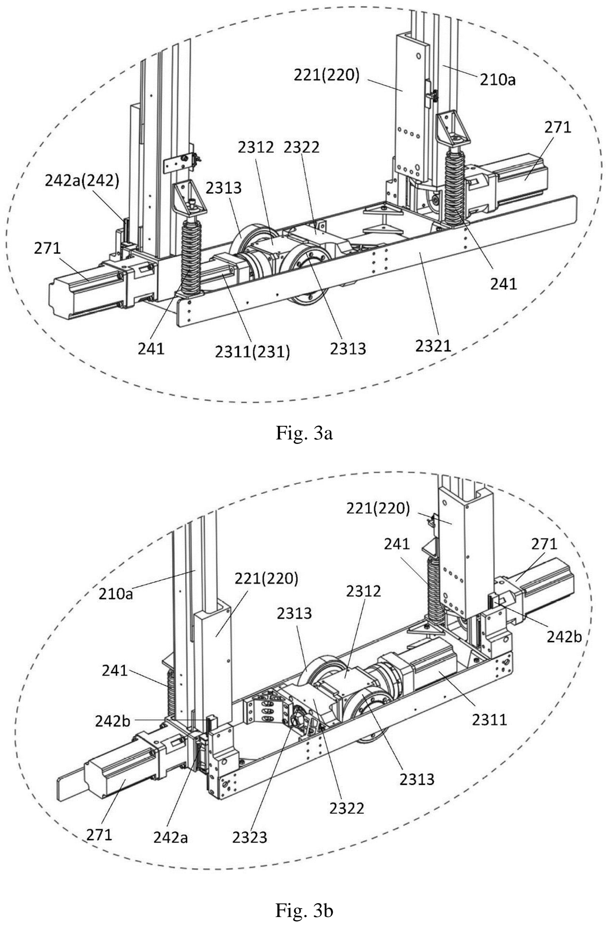

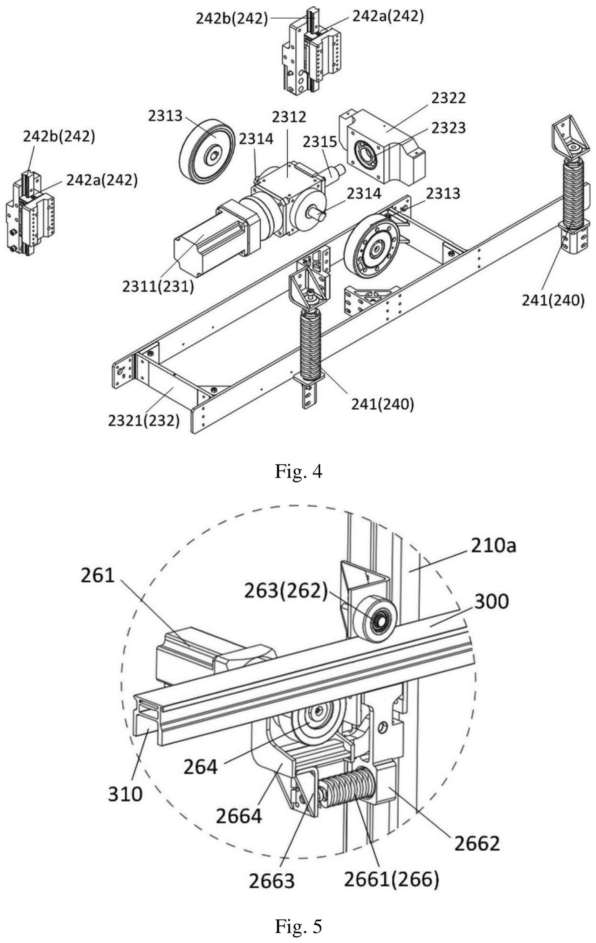

In some embodiments of the present application, referring to Fig. 3a to Fig. 4, Fig. 3a is an enlarged schematic diagram of part A in Fig. 2b; Fig. 3b is an enlarged schematic diagram of part A in Fig. 2b from another perspective; Fig. 4 is a decomposed schematic diagram of a ground walking mechanism shown in Fig. 2b.

As shown in Fig. 3a to Fig. 4, the driving component 231 includes a motor component and a walking wheel 2313. The motor component has a first output shaft 2314 perpendicular to a length direction of the laneway. The walking wheel 2313 is arranged on the first output shaft 2314, and is driven by the first output shaft 2314 to move on the ground, and the walking wheel 2313 is connected to the mounting component 232 through the first output shaft 2314.

The motor component includes a driving motor 2311 and a reducer 2312. The driving motor 2311 is in driving connection with the reducer 2312; the first output shaft 2314 extends out from the reducer 2312 to drive the walking wheel 2313 to move on the ground.

Specifically, there can be one or more walking wheels 2313 and first output shafts 2314, and at least one walking wheel 2313 is sleeved on each first output shaft 2314.

As shown in Fig. 4, in the specific embodiment of the present application, there are two first output shafts 2314 extending out from the reducer 2312, which are respectively arranged on two opposite sides of the reducer 2312 in a direction perpendicular to the laneway, and one walking wheel 2313 is sleeved on each first output shaft 2314.

The driving motor 2311 is configured to drive the walking wheel 2313 to roll on the ground, so as to drive, through the mounting component 232, the support frame 210 to slide in the horizontal direction of the goods shelves 100 based on the multiple horizontal tracks 300.

By applying the embodiments of the present application, the transfer robot 200 is configured to drive the walking wheel 2313 to roll on the ground through the driving motor 2311 of the motor component, to achieve sliding in the horizontal direction of the goods shelves 100.

In some embodiments of the present application, as shown in Fig. 3a to Fig. 4, the mounting component 232 includes a mounting frame 2321 and a bearing base 2322.

The support frame 210 is a column portal frame; the mounting frame 2321 is arranged between the two columns 210a of the support frame 210, and is fixedly connected to the bottom of the support frame 210 or movably connected to the bottom of the support frame 210 in the vertical direction; the bearing base 2322 is fixedly arranged within the mounting frame 2321 and connected to the motor component.

The motor component further has a second output shaft 2315 parallel to the length direction of the laneway; the second output shaft 2315 is configured to rotatably mate with the bearing block 2322.

Specifically, the second output shaft 2315 and the reducer 2312 are oppositely arranged on the other two opposite sides of the driving motor 2311; the bearing base 2322 is arranged with one or more coaxially arranged bearings 2323, and an inner ring of the bearings 2323 is interference fit with the second output shaft 2315.

In a specific embodiment of the present application, as shown in Fig. 3a to Fig. 4, the mounting frame 2321 can be a rectangular hollow frame, and the bearing base 2322 is arranged inside the mounting frame 2321, with the two ends of the bearing base 2322 are fixedly connected to the front and rear side walls of the mounting frame 2321. It should be noted that, the front and rear side walls of the mounting frame 2321 refer to two side walls parallel to the goods shelf 100. The driving component 231 is arranged inside the mounting frame 2321, and the second output shaft 2315 may rotate at the bearing base 2322.

By applying the embodiments of the present application, the mounting frame 2321 is arranged between the two columns 210a of the support frame 210 and is fixedly connected to the bottom of the support frame 210 or movably connected to the bottom of the support frame 210 in the vertical direction, which can improve the stability of the support frame 210.The walking wheel 2313 rolls in the horizontal direction of the goods shelves 100 under the driving of the driving motor 2311, to drive the support frame 210 to slide along the horizontal tracks 300 through the bearing base 2322 and the mounting frame 2321.

In some embodiments of the present application, as shown in Fig. 3a to Fig. 4, the ground walking mechanism 230 is further arranged with first suspension structures 240. The first suspension structures 240 are connected to the support frame 210 and the mounting component 232, to drive the ground walking mechanism 230 to fluctuate with the fluctuation of the ground.

Specifically, each of the two ends of the ground walking mechanism 230 is arranged with a first suspension structure 240; the mounting component 232 is movably connected to the bottom of the support frame 210 in the vertical direction through the first suspension structures 240. By driving the ground walking mechanism 230 to fluctuate with the fluctuation of the ground, the ground walking mechanism 230 is enabled to be always in contact with the ground.

By applying the embodiments of the present application, when the transfer robot 200 moves, the first suspension structures 240 provide the ground walking mechanism 230 with a pressing force toward the ground, and the ground walking mechanism 230 can fluctuate relative to the support frame 210 with the fluctuation of the ground, so as to avoid the walking wheel 2313 of the ground walking mechanism 230 leaving the ground due to the uneven ground. The walking wheel 2313 always being in contact with the ground also ensures sufficient friction between the ground and the walking wheel 2313, making the movement of the transfer robot 200 smoother.

In some embodiments of the present application, as shown in Figs. 3a to 4, each of the first suspension structures 240 includes a first elastic member 241. One end of the first elastic member 241 is fixedly connected to the support frame 210, and the other end of the first elastic member 241 is fixedly connected to the mounting component 232. The first elastic member 241 can apply, to the ground walking mechanism 230, an elastic force for pressing toward the ground.

Each of the first suspension structure 240 further includes a first sliding element 242. The first elastic member 241 and the first sliding member 242 are respectively arranged at two sides of the support frame 210 and are configured to cooperate with each other to drive the ground walking mechanism 230 to fluctuate with the fluctuation of the ground.

Specifically, both of the first elastic member 241 and the first sliding member 242 are arranged in the vertical direction, wherein a top end of the first elastic member 241 is fixedly connected to the support frame 210, and a bottom end of the first elastic member 241 is fixedly connected to the mounting component 232.

By applying the embodiments of the present application, the first elastic member 241 and the first sliding member 242 cooperate with each other, so that the ground walking mechanism 230 can not only support the transfer robot 200 but also fluctuate relative to the support frame 210 with the fluctuation of the ground when the transfer robot 200 moves, avoiding the walking wheel 2313 of the ground walking mechanism 230 leaving the ground due to the uneven ground. The walking wheel 2313 always being in contact with the ground also ensures sufficient friction between the ground and the walking wheel 2313, making the movement of the transfer robot 200 smoother.

In some embodiments of the present application, as shown in Fig. 3a to Fig. 4, the first sliding member 242 includes a first sliding block 242a and a first sliding track 242b; the first sliding block 242a is fixedly connected to the support frame 210; one side of the first sliding track 242b is fixedly connected to the mounting component 232, and the other side of the first sliding track 242b is connected with the first sliding block 242a in a sliding manner.

In a specific embodiment of the present application, as shown in Fig. 3a to Fig. 4, the first elastic member 241 and the first sliding member 242 of each of the two first suspension structures 240 are arranged in a corner of the mounting frame 2321, and a column 210a of the support frame 210 is clamped between the first elastic member 241 and the first sliding member 242.

The first elastic member 241 can be a spring, the top end and bottom end are fixedly connected to the column 210a and the mounting frame 2321 respectively, so that when the transfer robot 200 moves, the first sliding track 242b on the mounting frame 2321 can slide up and down relative to the first sliding block 242a on the column 210a.

By applying the embodiments of the present application, the up-down fluctuating of the ground walking mechanism 230 can be guided through the cooperation of the first sliding block 242a and the first sliding track 242b, to make the ground walking mechanism 230 fluctuate in the vertical direction, ensuring that the horizontal movements of the ground walking mechanism 230 and the support frame 210 in the direction of the laneway are synchronized.

In some embodiments of the present application, as shown in Fig. 2a to Fig. 2c, the transfer robot 200 further includes at least one lateral movement driving mechanism 260. The at least one lateral movement driving mechanism 260 is arranged on the support frame 210 and is respectively connected to the horizontal tracks 300 in a rolling manner; the lateral movement driving mechanism 260 is configured to cooperate with the ground walking mechanism 230 to cause the transfer robot 200 move in the horizontal direction of the first goods shelf 100A.

The transfer robot further includes multiple auxiliary wheel sets 250 which are arranged on the support frame 210.

Each of the multiple auxiliary wheel sets 250 is connected to a horizontal track 300 which is located at the same height as the auxiliary wheel set, in a rolling manner, and each of the at least one lateral movement driving mechanism 260 is connected to a horizontal track 300 which is at the same height as the lateral movement driving mechanism, in a rolling manner, to enable the transfer robot 200 to be hung on the first goods shelf 100A through the multiple auxiliary wheel sets 250 and the at least one lateral movement driving mechanism 260.

Specifically, the present application does not limit the arrangement sequence of the multiple auxiliary wheel sets 250 and the at least one lateral movement driving mechanism 260 on the support frame 210. In a specific embodiment of the present application, an upper horizontal track 300 and a lower horizontal track 300 are fixed on the outside of the goods shelf 100; the lateral movement driving mechanism 260 and the auxiliary wheel sets 250 are spaced apart on the support frame 210 in the vertical direction, and are connected to the upper horizontal track 300 and the lower horizontal track 300 respectively in a rolling manner. The multiple auxiliary wheel sets 250 are oppositely arranged on two columns 210a of the support frame 210, and two auxiliary wheel sets 250 located at the same height are connected to the same horizontal track 300 in a rolling manner, which can improve the stability of sliding of the transfer robot 200 on the horizontal tracks 300.

By applying the embodiments of the present application, the transfer robot 200 is hung on the outside of the goods shelves 100 based on the auxiliary wheel sets 250 and the lateral movement driving mechanism 260. A portion of the driving force that drives the transfer robot 200 to move horizontally, comes from the movement of the driving component 231 relative to the ground, and the other portion of the driving force comes from sliding of the support frame 210 along the horizontal tracks 300 driven by the lateral movement driving mechanism 260. The auxiliary wheel sets 250 can improve the efficiency and stability of the movement of the support frame 210 on the horizontal tracks 300.

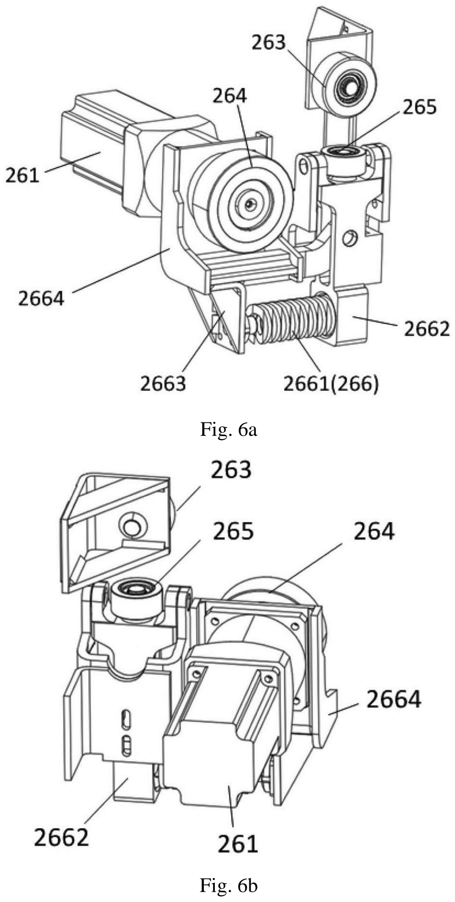

In some embodiments of the present application, referring to Fig. 5 to Fig. 6b, Fig. 5 is an enlarged schematic diagram of part B in Fig. 2b; Fig. 6a is a stereoscopic structure diagram of a lateral movement driving mechanism shown in Fig. 5; Fig. 6b is a stereoscopic structure diagram of the lateral movement driving mechanism shown in Fig. 6a from another perspective.

As shown in Fig. 5 to Fig. 6b, each lateral movement driving mechanism 260 includes a lateral movement motor 261 and two driving wheel sets 262.

The two driving wheel sets 262 are oppositely fixed on the support frame 210 and are connected to the same horizontal track 300 in a rolling manner; the lateral movement motor 261 is in driving connection with the driving wheel sets 262 and is configured to drive the support frame 210 to move on the horizontal track 300 through the driving wheel sets 262.

Specifically, the two driving wheel sets 262 are oppositely fixed on the two columns 210a of the support frame 210 and are connected to the same horizontal track 300 in a rolling manner; the lateral movement motor 261 is in driving connection with the driving wheel sets 262, and is configured to drive the support frame 210 to move in the horizontal direction on the horizontal track 300 through the driving wheel sets 262.

By applying the embodiments of the present application, two opposite driving wheel sets 262 are arranged to be connected to the horizontal track 300 in a rolling manner, which can improve the stability of sliding of the transfer robot 200 in the horizontal direction on the horizontal track 300. The driving wheel sets 262 are driven by the lateral movement motor 261, to drive the support frame 210 to slide in the horizontal direction on the horizontal track 300, which enables the material picking-up and placing component 220 to pick-up and place different material boxes in the length direction of the goods shelves 100.

In some embodiments of the present application, as shown in Fig. 5 to Fig. 6b, a driving wheel set 262 includes a first driving wheel 263, a second driving wheel 264, and a third driving wheel 265.

The first driving wheel 263 is located above the horizontal track 300 and is connected to a top surface of the horizontal track 300 in a rolling manner; the second driving wheel 264 and the third driving wheel 265 are located below the horizontal track 300; the first driving wheel 263, the second driving wheel 264 and the third driving wheel 265 are configured to cooperate with each other to enable the support frame 210 to move based on the horizontal track 300.

By applying the embodiments of the present application, the first driving wheel 263, the second driving wheel 264 and the third driving wheel 265 are arranged to be connected to the horizontal track 300 in a rolling manner, to change the sliding friction between the support frame 210 and the horizontal track 300 into rolling friction, so that the support frame 210 can move quickly on the horizontal track 300. The first driving wheel 263 is located above the horizontal track 300, the second driving wheel 264 and the third driving wheel 265 are located below the horizontal track 300, and the transfer robot 200 clamps the horizontal track 300 through the driving wheel sets 262 from both the up and down directions, so that the transfer robot 200 is hung on the first goods shelf 100A located at a side of the laneway, improving the stability of installation and horizontal movement of the transfer robot 200.

In some embodiments of the present application, as shown in Fig. 5 to Fig. 6b, the driving wheel set 262 further includes a third suspension structure 266.

The third suspension structure 266 is fixedly connected to the support frame 210, and the second driving wheel 264 and the third driving wheel 265 are fixed on the third suspension structure 266, wherein the second driving wheel 264 is connected to the bottom of the horizontal track 300 in a rolling manner, and is in driving connection with the lateral movement motor 261; the third driving wheel 265 is connected to the inner side wall of the horizontal track 300 in a rolling manner.

The third suspension structure 266 can fluctuate in the horizontal direction relative to the support frame 210, to apply a positive pressure in the horizontal direction to the support frame 210.

Specifically, the bottom of the horizontal track 300 which is connected to the two driving wheel sets 262 in a rolling manner, is arranged with a groove 310 with an opening facing down.

The first driving wheel 263 and the second driving wheel 264 are arranged vertically, and the third driving wheel 265 is arranged horizontally, so that the second driving wheel 264 is connected to a top surface of the groove 310 at bottom of the horizontal track 300 in a rolling manner, and is in driving connection with the lateral movement motor 261; the third driving wheel 265 is connected to a side wall of the groove 310 at bottom of the horizontal track 300 in a rolling manner.

The third suspension structure 266 applies a positive pressure in the horizontal direction to the support frame 210. During the movement of the transfer robot 200, when a portion of the support frame 210 where the lateral driving mechanism 260 is located moves faster than the other portion of the support frame 210, the direction of the positive pressure is opposite to the direction of movement, and when the portion of the support frame 210 where the lateral driving mechanism 260 is located moves slower than the other portion of the support frame 210, the direction of positive pressure is the same as the direction of movement, so that the upper and lower portions of the support frame 210 move synchronously and the swing angle of the support frame 210 is constrained.

By applying the embodiments of the present application, the first driving wheel 263 and the second driving wheel 264 are arranged vertically, and the third driving wheel 265 is arranged horizontally, thereby increasing a contact area between the driving wheel set 262 and the groove 310 at bottom of the horizontal track 300, and improving the efficiency and stability of movement of the support frame 210 on the horizontal track 300. Arranging of the third suspension structure 266 can apply pressure to the support frame 210, so as to constrain the swing angle of the support frame 210 when it moves along the horizontal track 300, and ensure the support frame 210 to move synchronously on each horizontal track 300.

In some embodiments of the present application, as shown in Fig. 5 to Fig. 6b, the third suspension structure 266 includes a third elastic member 2661. The third elastic member 2661 is arranged in the horizontal direction, and one end of the third elastic member 2661 is fixedly connected to the support frame 210 and the third driving wheel 265, and the other end of the third elastic member 2661 is fixedly connected to the second driving wheel 264. The third elastic member 2661 may apply a positive pressure in the horizontal direction to the support frame 210.

Specifically, the third elastic member 2661 can be a spring to make the structure of the third suspension structure 266 simpler and lighter, so as to reduce the weight of the transfer robot 200, reduce the load bore by the goods shelves 100, and improve the service life of the horizontal track 300 and the goods shelves 100.

One end of the third elastic member 2661 is fixedly connected to the column 210a of the support frame 210 through a first fixing member 2662. The first fixing member 2662 extends toward the groove 310 at the bottom of the horizontal track 300, and an end of the first fixing member 2662 is fixed with the third driving wheel 265, so that the third driving wheel 265 is located within the groove 310 at the bottom and is connected to the side wall of the groove 310 at the bottom in a rolling manner. The other end of the third elastic member 2661 is fixedly connected to the second driving wheel mounting base 2664 through a second fixing member 2663.

By applying the embodiments of the present application, the third suspension structure 266 applies the positive pressure in the horizontal direction to the support frame 210 through the third elastic member 2661, which can constrain the swing angle of the support frame 210 when it moves along the horizontal track 300 and ensure the synchronization of movement of the support frame 210 on each horizontal track 300.

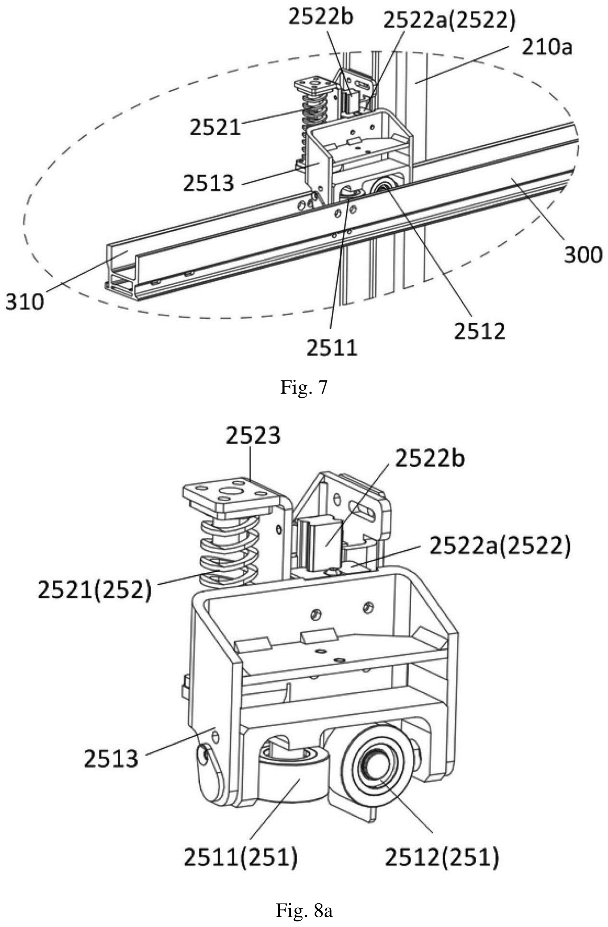

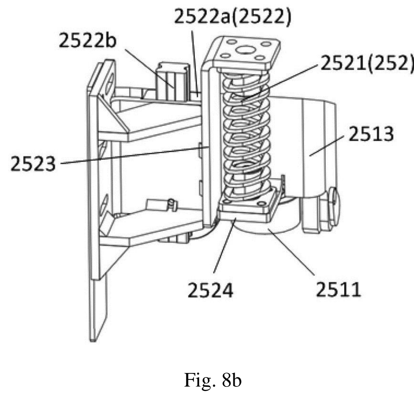

In some embodiments of the present application, referring to Fig. 7 to Fig.8b, Fig. 7 is an enlarged schematic diagram of part C in Fig. 2b; Fig. 8a is a stereoscopic structure diagram of an auxiliary wheel set shown in Fig. 7; Fig. 8b is a stereoscopic structure diagram of the auxiliary wheel set shown in Fig. 8a from another perspective.

As shown in Fig. 7 to Fig. 8b, each auxiliary wheel set 250 includes an auxiliary wheel 251, the auxiliary wheel 251 is connected to the horizontal track 300 in a rolling manner.

Each auxiliary wheel set 250 further includes a second suspension structure 252. The second suspension structure 252 is located above the horizontal track 300 and is fixedly connected to the support frame 210. The auxiliary wheel 251 is arranged on the second suspension structure 252 and is located above the horizontal track 300.

The second suspension structure 252 can fluctuate in the vertical direction relative to the horizontal track 300, to enable the auxiliary wheel 251 to be always tightly pressed against the horizontal track 300.

Specifically, the top of the horizontal track 300 connected to the auxiliary wheel set 250 in a rolling manner is arranged with a groove 310 with an opening facing upward. The auxiliary wheel 251 is arranged on the second suspension structure 252, is located in the groove 310 at the top of the horizontal track 300 and can roll within the groove 310 at the top. The support frame 210 is located above the horizontal track 300 through the auxiliary wheel 251 and is arranged within the groove 310 at the top of the horizontal track 300, and is hung on the first goods shelf 100A at a side of the laneway.

The second suspension structure 252 can fluctuate in the vertical direction relative to the horizontal track 300, so that the auxiliary wheel 251 is always located within the groove 310 at the top of the horizontal track 300.

During the moving of the transfer robot 200, the support frame 210 will fluctuate in the vertical direction with the fluctuation of the ground. When the auxiliary wheel 251 on the support frame 210 is to fluctuate upward relative to the horizontal track 300, the second suspension structure 252 apply the pressure to the auxiliary wheel 251, so that the auxiliary wheel 251 is always located within the groove 310 at the top of the horizontal track 300.

In addition, due to the possible error in the installation position of the horizontal tracks 300 on the first goods shelf 100A, the spacing value between the upper horizontal track 300 and the lower horizontal track 300 deviates from a predetermined spacing. At this time, when the transfer robot 200 is installed on the horizontal track 300, the second suspension structure 252 can adjust the position of the auxiliary wheel 251 in the vertical direction relative to the support frame 210 by itself, to ensure that the auxiliary wheel 251 is always located within the groove 310 at the top of the horizontal track 300.

By applying the embodiments of the present application, through the second suspension structure 252, the auxiliary wheel 251 is always tightly pressed against the horizontal track 300 and is avoided slipping off the horizontal track 300, thus improving the stability of sliding of the transfer robot 200 on the horizontal track 300.

In some embodiments of the present application, as shown in Fig. 7 to Fig. 8b, the second suspension structure 252 includes a second elastic member 2521. One end of the second elastic member 2521 is fixedly connected to the support frame 210, and the other end of the second elastic member 2521 is fixedly connected to the auxiliary wheel 251; the second elastic member 2521 can apply, to the auxiliary wheel 251, an elastic force for pressing towards the horizontal track 300.

The second suspension structure 252 further includes a second sliding member 2522. The second sliding member 2522 includes a second sliding block 2522a and a second sliding track 2522b. The second slider 2522a is fixedly connected to the auxiliary wheel 251; one side of the second sliding track 2522b is fixedly connected to the support frame 210, and the other side of the second sliding track 2522b is connected to the second sliding block 2522a in a sliding manner.

Specifically, both of the second elastic member 2521 and the second sliding member 2522 are arranged in the vertical direction, wherein a top end of the second elastic member 2521 is fixedly connected to the support frame 210, and a bottom end of the second elastic member 2521 is fixedly connected to the auxiliary wheel 251.

The auxiliary wheel 251 is always located within the groove 310 at the top of the horizontal track 300 based on the second elastic member 2521 and the second sliding member 2522.

The second elastic member 2521 can be a spring to make the structure of the second suspension structure 252 simpler and lighter, so as to reduce the weight of the transfer robot 200, reduce the load bore by the first goods shelf 100A, and improve the service life of the horizontal track 300 and the first goods shelf 100A.

The top end of the second elastic member 2521 is fixedly connected to the column 210a of the support frame 210 through a third fixing member 2523, and the bottom end of the second elastic member 2521 is fixedly connected to the auxiliary wheel 251 through a fourth fixing member 2524, enabling to apply the elastic force for pressing towards the horizontal track 300 to the auxiliary wheel 251 when the transfer robot 200 moves, so that the second sliding track 2522b can slide up and down relative to the second sliding block 2522a on the column 210a of the support frame 210.

By applying the embodiments of the present application, the second elastic member 2521 and the second sliding member 2522 enable the auxiliary wheel 251 to be always located within the groove 310 at the top of the horizontal track 300 and to be avoided slipping off the horizontal track 300, thus improving the stability of sliding of the transfer robot 200 on the horizontal track 300.

In some embodiments of the present application, as shown in Fig. 7 to Fig. 8b, the auxiliary wheel 251 includes a first auxiliary wheel 2511, a second auxiliary wheel 2512, and an auxiliary wheel mounting base 2513.

The auxiliary wheel mounting base 2513 is fixedly connected with the second suspension structure 252; the first auxiliary wheel 2511 and the second auxiliary wheel 2512 are fixed on the auxiliary wheel mounting base 2513 side by side.

The first auxiliary wheel 2511 is connected to the inner side wall of the horizontal track 300 in a rolling manner; the second auxiliary wheel 2512 is connected to the top of the horizontal track 300 in a rolling manner.

Specifically, the first auxiliary wheel 2511 is arranged horizontally and connected to the side wall of the groove 310 at the top of the horizontal track 300 in a rolling manner; the second auxiliary wheel 2512 is arranged vertically and connected to the bottom of the groove 310 at the top of the horizontal track 300 in a rolling manner.

Specifically, the auxiliary wheel mounting base 2513 is fixedly connected to the fourth fixing member 2524 of the second suspension structure 252. By applying the embodiments of the present application, the first auxiliary wheel 2511 is arranged horizontally, and the second auxiliary wheel 2512 is arranged vertically, thus increasing a contact area between the auxiliary wheel 251 and the groove 310 at the top of the horizontal track 300, and improving the efficiency and stability of movement of the support frame 210 on the horizontal track 300.

In some embodiments of the present application, as shown in Fig. 1a to Fig.2b, the transfer robot further includes a lifting mechanism 270. The lifting mechanism 270 is arranged on the support frame 210, and can drive the material box picking-up and placing component 220 to rise and fall along the support frame 210 to pick-up and place the material boxes at different heights on the goods shelves 100.

Specifically, in a specific embodiment of the present application, the transfer robot 200 further includes two lifting mechanisms 270, and the material box picking-up and placing component 220 is arranged between two columns 210a of the support frame 210 and is connected to the support frame 210 in a sliding manner in the vertical direction; the two lifting mechanisms 270 are respectively arranged on the two columns 210a of the support frame 210, and can drive the material box picking-up and placing component 220 to rise and fall along the support frame 210, to pick-up and place the material boxes at different heights on the goods shelves 100.

Each lifting mechanism 270 may include a lifting motor 271, a conveyor belt 272, and two transmission wheels 273. The two transmission wheels 273 are respectively fixed at the top and bottom of a column 210a of the support frame 210; the lifting motor 271 is in driving connection with the bottom transmission wheel 273 and is fixed on the column 210a of the support frame 210; the conveyor belt 272 wraps around the bottom transmission wheel 273 and the top transmission wheel 273, and the head and tail ends are fixedly connected to the material box picking-up and placing component 220. The lifting motor 271 is configured to drive the transmission wheels and the conveyor belt 272 for transmission, which can drive the material box picking-up and placing component 220 to slide vertically along the support frame 210 to pick-up and place the material boxes at different heights on the goods shelves 100.

By applying the embodiment of the present application, the material box picking-up and placing component 220 can rise and fall along the support frame 210 under the driving of the lifting mechanism 270, to pick-up and place the material boxes at different heights on the goods shelves 100; the material box picking-up and placing component 220 can also move in the horizontal direction of the goods shelves 100 along with the support frame 210, to pick-up and place different material boxes in the length direction of the goods shelves 100.

In some embodiments of the present application, as shown in Fig. 1a to Fig. 2a, the transfer robot 200 further includes a control device 280 for controlling the transfer robot 200 to move and to pick-up and place material boxes. The control device 280 and the support frame 210 are arranged on the outside of the goods shelves 100 side by side, and are fixedly connected to the mounting frame 2321 of the ground walking mechanism 230. The bottom of the control device 280 is arranged with a roller for contacting with the ground, which can move in the horizontal direction of the goods shelves 100 along with the support frame 210.

As shown in Fig. 2a, a tow chain 211 is further arranged on the support frame 210, to constrain the cable of the transfer robot 200.

In the following, the warehousing system provided in an embodiment of the present application will be illustrated.

The warehousing system provided in the embodiment of the present application, as shown in Fig. 1a and Fig. 1b, includes the goods shelves 100 and at least one transfer robot 200 described in any one of the above embodiments, wherein a laneway is formed between adjacent goods shelves 100.

The transfer robot 200 is hung on the first goods shelf 100A located at a side of the laneway, and the ground walking mechanism 230 at the bottom of the transfer robot 200 is located in the laneway and at a side of the laneway which is close to the first goods shelf 100A.

Specifically, when the number of transfer robots 200 is 2, the transfer robots can be hung on two sides of the first goods shelf 100A in the length direction of the first goods shelf 100A, so as to simultaneously pick-up and place the material boxes on the goods shelf 100 at the two sides. If the length of a goods shelf 100 is sufficient, 2 or more transfer robots 200 can be arranged on the same side of the first goods shelf 100A. The present application does not limit the installation and arrangement of transfer robots 200 on the first goods shelf 100A.

In the warehousing system provided in the embodiment of the present application, the transfer robot 200 is hung on the first goods shelf 100A at a side of the laneway through the support frame 210, and can slide in the horizontal direction of the goods shelves 100; the ground walking mechanism 230 is located in the laneway and at a side of the laneway which is close to the first goods shelf 100A, to be in rolling contact with the ground where the goods shelves 100 are located, and can provide a support force and walking power for the transfer robot 200. A portion of the weight of the transfer robot 200 is applied to the ground through the ground walking mechanism 230, reducing the load bore by the goods shelves 100, that is, reducing the requirement for the load-bearing capacity of the goods shelves 100.

It should be noted that, relational terms such as first and second herein are only to distinguish one entity or operation from another, and do not necessarily require or imply any actual relationship or order between these entities or operations. Moreover, the terms "include", "contain", or any other variation thereof are intended to encompass a non-exclusive inclusion, such that a process, method, article, or device that includes a series of elements not only includes those elements, but also other elements that are not explicitly listed, or also include elements inherent in such a process, method, article, or device. Without further limitations, the elements limited by the statement "including one..." do not exclude the existence of other identical elements in the process, method, article, or device that includes the elements.

The above descriptions are only preferred embodiments of the present application, and are not used to limit the present application. Any modifications, equivalent replacements, improvements, etc. made within the spirit and principles of the present application shall be included within the scope of protection of the present application.

## Claims

1. A transfer robot of a warehousing system, wherein the warehousing system comprises goods shelves (100); a laneway is formed between adjacent goods shelves (100);
the transfer robot (200) is hung on a first goods shelf (100A) located at a side of the laneway; the transfer robot (200) comprises a support frame (210), a material box picking-up and placing component (220) and a ground walking mechanism (230); wherein the support frame (210) can move in a horizontal direction on a side of the first goods shelf (100A); the material box picking-up and placing component (220) can rise and fall relative to the support frame (210) and pick-up and place material boxes; the ground walking mechanism (230) is arranged at bottom of the support frame (210), is located in the laneway and at a side of the laneway which is close to the first goods shelf (100A), and is configured to cooperate with a ground to provide a support force and walking power for the transfer robot (200).

2. The transfer robot according to claim 1, wherein the ground walking mechanism (230) comprises:
a driving component (231) arranged at the bottom of the support frame (210), wherein the driving component (231) is configured to be in rolling contact with the ground, to support and drive the support frame (210) to move on the ground in a horizontal direction of the goods shelves (100).

3. The transfer robot according to claim 2, wherein the ground walking mechanism (230) further comprises a mounting component (232); wherein the mounting component (232) is fixedly connected to the bottom of the support frame (210) or movably connected to the bottom of the support frame (210) in a vertical direction, and the driving component (231) is arranged at the mounting component (232).

4. The transfer robot according to claim 3, wherein the driving component (231) comprises a motor component and a walking wheel (2313);
wherein the motor component has a first output shaft (2314) perpendicular to a length direction of the laneway; the walking wheel (2313) is arranged on the first output shaft (2314), and is driven by the first output shaft (2314) to move on the ground, and the walking wheel (2313) is connected to the mounting component (232) through the first output shaft (2314).

5. The transfer robot according to claim 4, wherein the motor component comprises a driving motor (2311) and a reducer (2312);
wherein the driving motor (2311) is in driving connection with the reducer (2312); the first output shaft (2314) extends out from the reducer (2312) to drive the walking wheel (2313) to move on the ground.

6. The transfer robot according to claim 3, wherein the mounting component (232) comprises a mounting frame (2321) and a bearing base (2322);
wherein the support frame (210) is a column portal frame;
the mounting frame (2321) is arranged between two columns (210a) of the support frame (210), and is fixedly connected to the bottom of the support frame (210) or movably connected to the bottom of the support frame (210) in the vertical direction; the bearing base (2322) is fixedly arranged within the mounting frame (2321) and connected to the motor component.

7. The transfer robot according to claim 6, wherein
the motor component further has a second output shaft (2315) parallel to a length direction of the laneway; wherein the second output shaft (2315) is configured to rotatably mate with the bearing base (2322).

8. The transfer robot according to claim 3, wherein the ground walking mechanism (230) is further arranged with first suspension structures (240);
wherein the first suspension structures (240) are connected to the support frame (210) and the mounting component (232), to drive the ground walking mechanism (230) to fluctuate with a fluctuation of the ground.

9. The transfer robot according to claim 8, wherein each of the first suspension structures (240) comprises a first elastic member (241); wherein one end of the first elastic member (241) is fixedly connected to the support frame (210), and the other end of the first elastic member (241) is fixedly connected to the mounting component (232); the first elastic member (241) can apply, to the ground walking mechanism (230), an elastic force for pressing towards the ground.

10. The transfer robot according to claim 9, wherein each of the first suspension structures (240) further comprises a first sliding member (242); wherein the first elastic member (241) and the first sliding member (242) are respectively arranged at two sides of the support frame (210) and are configured to cooperate with each other to drive the ground walking mechanism (230) to fluctuate with the fluctuation of the ground.

11. The transfer robot according to claim 10, wherein
the first sliding member (242) comprises a first sliding block (242a) and a first sliding track (242b); wherein the first sliding block (242a) is fixedly connected to the support frame (210); one side of the first sliding track (242b) is fixedly connected to the mounting component (232), and the other side of the first sliding track (242b) is connected to the first sliding block (242a) in a sliding manner.

12. The transfer robot according to claim 1, wherein the goods shelves (100) are fixedly arranged with multiple horizontal tracks (300) on an outside of the goods shelves (100); the multiple horizontal tracks (300) are spaced apart in a vertical direction of the goods shelves (100);
the transfer robot (200) is hung on the first goods shelf (100A) through the multiple horizontal tracks (300).

13. The transfer robot according to claim 12, wherein the transfer robot further comprises at least one lateral movement driving mechanism (260);
wherein the at least one lateral movement driving mechanism (260) is arranged on the support frame (210) and is respectively connected to the horizontal tracks (300) in rolling manner; the at least one lateral movement driving mechanism (260) is configured to cooperate with the ground walking mechanism (230) to cause the transfer robot (200) to move in a horizontal direction of the first goods shelf (100A).

14. The transfer robot according to claim 13, wherein the transfer robot further comprises multiple auxiliary wheel sets (250) which are arranged on the support frame (210);
each of the multiple auxiliary wheel sets (250) is connected to a horizontal track (300) which is located at a same height as the auxiliary wheel set, in a rolling manner, and each of the at least one lateral movement driving mechanism (260) is connected to a horizontal track (300) which is located at a same height as the lateral movement driving mechanism, in a rolling manner, to enable the transfer robot (200) to be hung on the first goods shelf (100A) through the multiple auxiliary wheel sets (250) and the at least one lateral movement driving mechanism (260).

15. The transfer robot according to claim 14, wherein each of the auxiliary wheel sets (250) comprises an auxiliary wheel (251);
wherein the auxiliary wheel (251) is connected to the horizontal track (300) in a rolling manner.

16. The transfer robot according to claim 14, wherein each of the auxiliary wheel sets (250) further comprises a second suspension structure (252);
wherein the second suspension structure (252) is located above the horizontal track (300) and is fixedly connected to the support frame (210), and the auxiliary wheel (251) is arranged on the second suspension structure (252) and is located above the horizontal track (300);
the second suspension structure (252) can fluctuate in the vertical direction relative to the horizontal track (300), to enable the auxiliary wheel (251) to be always tightly pressed against the horizontal track (300).

17. The transfer robot according to claim 16, wherein the second suspension structure (252) comprises a second elastic member (2521);
wherein one end of the second elastic member (2521) is fixedly connected to the support frame (210), and the other end of the second elastic member (2521) is fixedly connected to the auxiliary wheel (251); the second elastic member (2521) can apply, to the auxiliary wheel (251), an elastic force for pressing towards the horizontal track (300).

18. The transfer robot according to claim 17, wherein the second suspension structure (252) further comprises a second sliding member (2522);
wherein the second sliding member (2522) comprises a second sliding block (2522a) and a second sliding track (2522b); wherein the second sliding block (2522a) is fixedly connected to the auxiliary wheel (251); one side of the second sliding track (2522b) is fixedly connected to the support frame (210), and the other side of the second sliding track (2522b) is connected to the second sliding block (2522a) in a sliding manner.

19. The transfer robot according to claim 15, wherein the auxiliary wheel (251) comprises a first auxiliary wheel (2511), a second auxiliary wheel (2512) and an auxiliary wheel mounting base (2513);
wherein the auxiliary wheel mounting base (2513) is fixedly connected to the second suspension structure (252); the first auxiliary wheel (2511) and the second auxiliary wheel (2512) are fixed on the auxiliary wheel mounting base (2513) side by side;
the first auxiliary wheel (2511) is connected to an inner side wall of the horizontal track (300) in a rolling manner; the second auxiliary wheel (2512) is connected to a top of the horizontal track (300) in a rolling manner.

20. The transfer robot according to claim 13, wherein each of the lateral movement driving mechanism (260) comprises a lateral movement motor (261) and two driving wheel sets (262);
the two driving wheel sets (262) are oppositely fixed on the support frame (210) and are connected to a same horizontal track (300) among the horizontal tracks (300) in a rolling manner; the lateral movement motor (261) is in driving connection with the driving wheel sets (262) and is configured to drive the support frame (210) to move on the horizontal track (300) through the driving wheel sets (262).

21. The transfer robot according to claim 20, wherein each of the driving wheel sets (262) comprises a first driving wheel (263), a second driving wheel (264) and a third driving wheel (265);
the first driving wheel (263) is located above the horizontal track (300) and is connected to a top surface of the horizontal track (300) in a rolling manner; the second driving wheel (264) and the third driving wheel (265) are located below the horizontal track (300); the first driving wheel 263, the second driving wheel 264 and the third driving wheel 265 are configured to cooperate with each other to enable the support frame (210) to move based on the horizontal track (300).

22. The transfer robot according to claim 21, wherein each of the driving wheel sets (262) further comprises a third suspension structure (266);
the third suspension structure (266) is fixedly connected to the support frame (210), and the second driving wheel (264) and the third driving wheel (265) are fixed on the third suspension structure (266), wherein the second driving wheel (264) is connected to bottom of the horizontal track (300) in a rolling manner and is in driving connection with the lateral movement motor (261); the third driving wheel (265) is connected to an inner side wall of the horizontal track (300) in a rolling manner;
the third suspension structure (266) can fluctuate in the horizontal direction relative to the support frame (210), to apply a positive pressure in the horizontal direction to the support frame (210).

23. The transfer robot according to claim 22, wherein the third suspension structure (266) comprises a third elastic member (2661); wherein the third elastic member (2661) is arranged in the horizontal direction, one end of the third elastic member (2661) is fixedly connected to the support frame (210) and the third driving wheel (265), and the other end of the third elastic member (2661) is fixedly connected to the second driving wheel (264); the third elastic member (2661) can apply the positive pressure in the horizontal direction to the support frame (210).

24. The transfer robot according to claim 1, wherein the transfer robot further comprises a lifting mechanism (270);
wherein the lifting mechanism (270) is arranged on the support frame (210), and can drive the material box picking-up and placing component (220) to rise and fall along the support frame (210) to pick-up and place material boxes at different heights on the goods shelves (100);
the material box picking-up and placing component (220) further can horizontally extend and retract relative to the support frame (210) to pick-up and place material boxes on the goods shelves (100) on two sides of the laneway.

25. A warehousing system, comprising the goods shelves (100) and at least one transfer robot (200) in any one of claims 1 to 24; wherein a laneway is formed between adjacent goods shelves (100); the transfer robot (200) is hung on the first goods shelf (100A) located at a side of the laneway; the ground walking mechanism (230) at the bottom of the transfer robot (200) is located in the laneway and at a side of the laneway which is close to the first goods shelf (100A).
